# FASCICULE DE BREVET EUROPEEN

(11) **EP 1 653 322 B1**
(45) Date de publication et mention de la délivrance du brevet: **01.01.2014**
(21) Numéro de dépôt: 05292295.2
(22) Date de dépôt: 28.10.2005
(51) Int. Cl.: G06F 21/62, G06F 21/86

(54) **Procédé de transmission à un client de documents stockés par un serveur de documents, et dispositif de transmission**
Verfahren zur Übertragung von gespeicherten Dokumenten an einen Clienten durch einen Dokumentenserver und Übertragungsvorrichtung
Procedure for sending a client documents stored by a document server, and device for transfer

(30) Priorité: 28.10.2004 FR 0411530
(43) Date de publication de la demande: 03.05.2006
(73) Titulaire: Cabinet Lhermet La Bigne & Remy, 75001 Paris (FR)
(72) Inventeur: Mery, Laurent, 95120 Ermont (FR); Remy, Vincent, 89340 Saint Agnan (FR)
(74) Mandataire: Remy, Vincent Noel Paul

(56) Documents cités:
- EP-A1- 0 929 023
- WO-A-02/100069

## Description

La présente invention concerne un procédé de transmission à un client de documents stockés par un serveur de documents et un dispositif de transmission de documents à un client.

Il est connu dans l'état de la technique de stocker des documents dans un serveur de documents relié à un réseau de transmission de données, par exemple le réseau Internet. Un terminal client, également relié au réseau Internet, peut alors accéder par téléchargement aux documents du serveur de documents.

Le document EP 0 929 023 A1 divulgue, dans un contexte d'impression securisée, un procédé de transmission de documents selon le préambule de la revendication 1.

Classiquement, le procédé de transmission comporte une étape d'authentification du client pour que le téléchargement de documents ne soit disponible qu'à des clients connus. En outre, l'authentification permet de contrôler les documents auxquels un client a accès.

Après l'étape d'authentification du client par le serveur de documents, le client peut consulter une liste de documents qu'il est autorisé à télécharger.

Cependant, la sécurité du serveur de documents n'est pas assurée par ce procédé.

Par exemple, si une personne mal intentionnée réussit, lors de l'étape d'authentification, à se faire passer pour un client connu du serveur de documents, elle peut alors accéder frauduleusement à des documents qui ne lui sont théoriquement pas accessibles.

De plus, comme le serveur de documents est connecté au réseau de transmission de données, un pirate informatique peut attaquer le serveur pour tenter d'y pénétrer.

L'invention a pour but de remédier à ces inconvénients en fournissant un procédé de transmission à un client de documents stockés par un serveur de documents grâce auquel l'accès frauduleux à des documents du serveur est bien plus compliqué que dans l'état de la technique.

A cet effet, l'invention a pour objet un procédé de transmission selon la revendication 1.

Grâce au procédé de l'invention, le serveur de documents n'est pas visible par les clients puisque seul le serveur de commandes est accessible aux clients. Il est donc difficile pour un pirate de perpétrer des attaques sur le serveur de documents pour récupérer des documents.

De plus, même si un pirate passait avec succès l'étape d'authentification, il n'aurait accès qu'à des identifiants des documents et non aux documents eux-mêmes. La désignation de certains de ces documents par le pirate entraînerait leur transmission à l'adresse du véritable client et non à celle du pirate.

Pour recevoir des documents à son adresse personnelle, le pirate devrait modifier la table de correspondance. Or, comme la table de correspondance est stockée dans le serveur de documents, elle n'est pas accessible au pirate.

Il apparaît donc qu'une surveillance attentive de la table de correspondance par l'administrateur du serveur de documents permet de contrôler les clients qui ont accès aux documents et d'éviter ainsi le piratage du serveur.

Selon un mode de réalisation particulier, la liste d'identifiants de documents susceptibles d'être transmis au client, mise à disposition par le serveur de commandes, est fonction du client authentifié. Ainsi, on peut restreindre l'accès d'un client à certains documents du serveur de documents.

De manière optionnelle, les identifiants de documents désignés ainsi que l'identifiant du client sont envoyés par le serveur de commandes à un serveur intermédiaire. Grâce au serveur intermédiaire, le serveur de commandes n'échange pas de données directement avec le serveur de documents. Ainsi, un pirate ne peut pas connaître l'adresse du serveur de documents par un simple contrôle systématique des données échangées par le serveur de commandes.

Un procédé de transmission à un client de documents stockés par un serveur de documents peut en outre comporter l'une ou plusieurs des caractéristiques suivantes :
- le serveur de commandes met à disposition du client, après son authentification, une liste d'identifiants de documents susceptibles d'être transmis ;
- le serveur de documents télécharge les identifiants de documents désignés ainsi que l'identifiant du client qui sont sur le serveur de commandes ;
- les -identifiants contenus dans le serveur de commandes sont mis à jour régulièrement par transmission, par le serveur de documents, d'une liste d'identifiants au serveur de commandes ;
- les identifiants des documents sont classés dans le serveur de commandes selon une arborescence comprenant plusieurs niveaux hiérarchiques et dans laquelle l'utilisateur peut naviguer, et au cours de la navigation, un changement de niveau hiérarchique déclenche la mise à jour des identifiants du niveau auquel l'utilisateur accède ;
- la mise à jour est commandée par une requête du serveur de commandes auprès du serveur de documents.

L'invention a également pour objet un dispositif de transmission de documents selon la revendication 8.

L'invention sera mieux comprise à la lecture de la description qui va suivre, donnée uniquement à titre d'exemple et faite en se référant aux dessins annexés dans lesquels :
- la figure 1 est un schéma d'un terminal client relié à un dispositif de transmission de documents selon l'invention ;
- la figure 2 est un schéma d'un premier mode de réalisation d'un procédé de mise à jour des identifiants de documents susceptibles d'être transmis au terminal client ;
- la figure 3 est un schéma d'un procédé de transmission à un client de documents stockés par un serveur de documents selon l'invention ;
- La figure 4 est un schéma d'un second mode de réalisation du procédé de mise à jour des identifiants de documents susceptibles d'être transmis au terminal client.

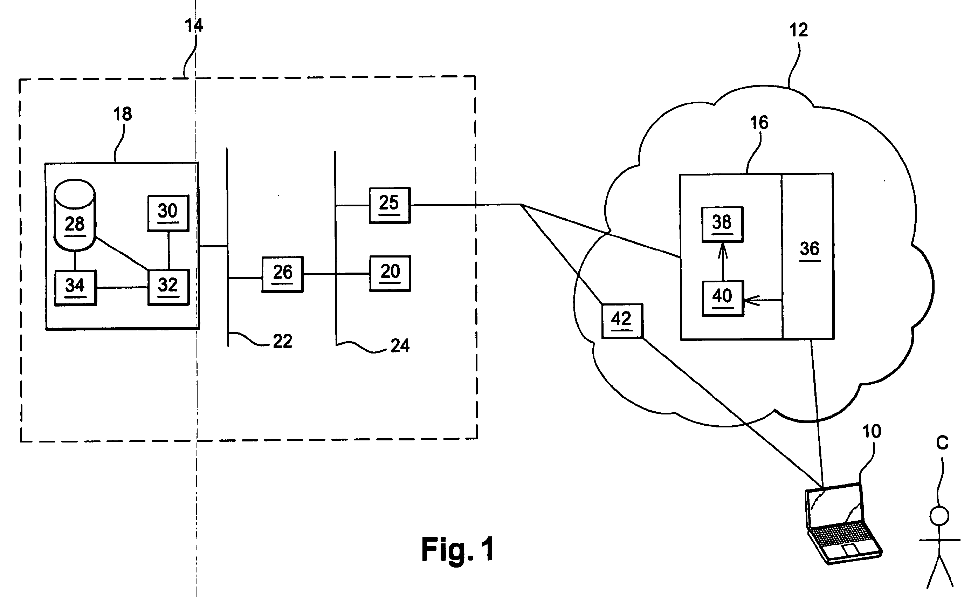

On a représenté sur la figure 1 un dispositif de transmission de documents numériques à un client C. Ce dispositif appartient par exemple à une entreprise qui travaille pour différents clients. Chaque client C a donc des dossiers qui sont traités par l'entreprise, ces dossiers étant numérisés et stockés dans des serveurs de l'entreprise. Pour permettre à un client C d'accéder à un dossier numérique à distance, l'entreprise se dote d'un dispositif de transmission de documents selon l'invention.

Pour accéder aux serveurs de l'entreprise, le client C utilise un terminal client 10 constitué par exemple par un ordinateur personnel. L'ordinateur 10 est connecté à un réseau de transmission de données 12, par exemple le réseau Internet.

Un réseau local 14 est relié au réseau Internet 12. Ce réseau local 14 est par exemple le réseau interne de l'entreprise.

Le dispositif de transmission de documents de l'invention comprend :
- un serveur de commandes 16 connecté au réseau Internet 12;
- un serveur de documents 18 faisant partie du réseau local 14, destiné à stocker des documents numériques de l'entreprise ; et
- un serveur intermédiaire 20 faisant partie du réseau local 14, intercalé entre le serveur de commandes 16 et le serveur de documents 18.

Le réseau local 14 est divisé en deux sous-réseaux «fermé » 22 et « ouvert » 24.

Le réseau ouvert 24 dispose d'une connexion au réseau Internet 12 par l'intermédiaire d'un routeur 25. Le serveur intermédiaire 20 fait partie du réseau ouvert 24.

Le réseau fermé 22 est connecté au réseau ouvert 24 via une passerelle 26.

Chaque client C possède un identifiant et un mot de passe pour se connecter par l'intermédiaire de l'ordinateur 10 au serveur de commandes 16. L'identifiant et le mot de passe sont créés par un administrateur du serveur de documents lors de l'ouverture d'un compte client.

Le serveur de documents 18 comporte :
- des moyens de stockage 28 des documents numériques de l'entreprise susceptibles d'être transmis au client C,
- des moyens de stockage 30 d'une table mettant en correspondance les identifiants de clients avec des adresses électroniques de livraison prédéterminées pour chaque client C,
- des moyens de transmission 32 par messagerie électronique de documents au_ client C, constitués par exemple par un logiciel de messagerie classique,
- des moyens 34 de génération et de transmission d'une liste d'identifiants des documents stockés dans les moyens de stockage 28. Les identifiants sont par exemple constitués par les noms des documents stockés.

La table de correspondance stockée dans les moyens de stockage 30 n'est accessible qu'à l'administrateur du serveur de documents 18. Ainsi, lors de la création du compte client, l'administrateur remplit la table de correspondance en y ajoutant l'identifiant de l'utilisateur et une adresse de courrier électronique à laquelle le client C souhaite recevoir les documents qu'il commande.

Le serveur de commandes 16 comporte :
- des moyens d'authentification 36 du client,
- des moyens de stockage 38 de la liste des identifiants des documents stockés dans les moyens de stockage 28, cette liste ayant été générée par les moyens de génération 34,
- des moyens de désignation 40 de documents par le client C à l'aide des identifiants stockés dans les moyens de stockage 38 de la liste d'identifiants. Par exemple, le serveur de commandes comprend un serveur HTML hébergeant des pages Internet listant les identifiants des documents stockés dans les moyens de stockage 28. Ces pages Internet sont accessible au client C par l'intermédiaire de son ordinateur 10. Les identifiants sont par exemple affichés sous forme de liens Internet, la désignation des identifiants par le client C étant classiquement réalisée en cliquant sur les liens Internet à l'aide d'une souris.

Le serveur intermédiaire 20 assure l'interface entre le serveur de commandes 16 et le serveur de documents 18. En particulier, le serveur intermédiaire analyse des requêtes émises par le serveur de commandes et les convertit dans un format prédéterminé compatible avec le serveur de documents 18. La passerelle 26 interdit les transmissions depuis le réseau ouvert 24 vers le réseau fermé 22 qui ne sont pas dans le format prédéterminé.

La passerelle 26 constitue le seul dispositif du réseau ouvert 24 qui connaît l'adresse IP du serveur de documents 18. Par conséquent, un pirate ne peut accéder directement depuis le réseau Internet 12 au serveur de documents 18 sans passer par la passerelle 26. La passerelle 26 a donc une fonction de filtrage des transmissions entre les réseaux fermé 22 et ouvert 24 à la manière d'un pare-feu.

Un serveur de messagerie 42 classique, sur lequel le client C possède un compte de messagerie, est connecté au réseau Internet 12.

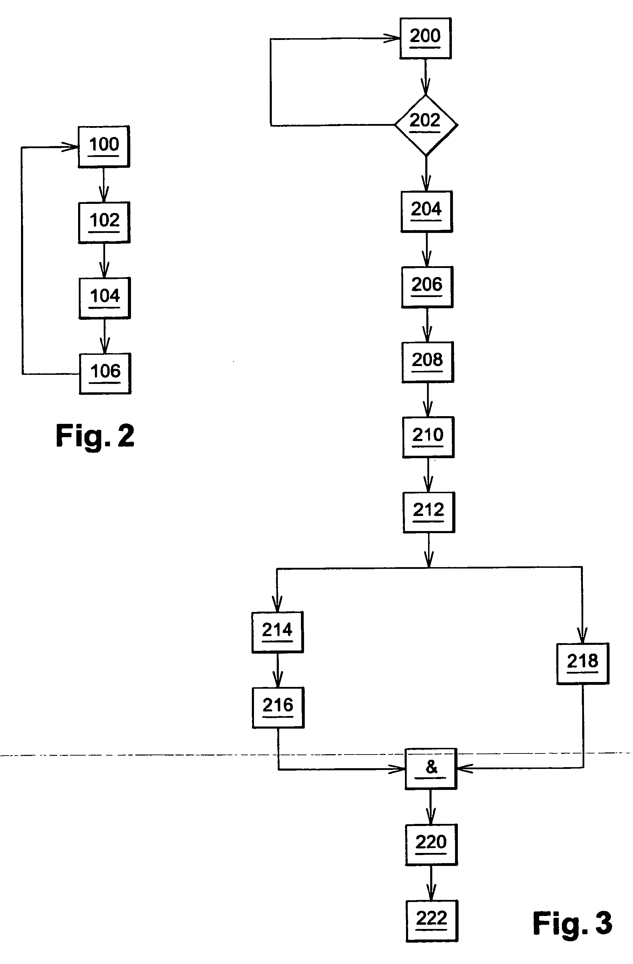

Le fonctionnement du dispositif de transmission de documents va maintenant être décrit en se référant aux figures 2 et 3.

Le serveur de commandes 16 et le serveur de documents 18 étant distincts, la liste des identifiants stockée dans les moyens de stockage 38 du serveur de commandes doit être mise à jour régulièrement pour reproduire le plus fidèlement possible l'état du serveur de documents 18.

Un premier mode de réalisation du procédé de mise à jour de la liste des identifiants de documents stockés dans les moyens de stockage 38 du serveur de commandes 16 est schématisé sur la figure 2.

Au cours d'une première étape 100, les moyens 34 de génération et de transmission du serveur de documents 18 accèdent aux moyens de stockage 28 de documents pour obtenir une liste des documents susceptibles d'être transmis.

Au cours de l'étape suivante 102, le module 34 de génération et de transmission transmet cette liste au serveur intermédiaire 20 via la passerelle 26.

La passerelle 26 contrôle le format de la liste et l'envoie au cours d'une étape 102 aux moyens de stockage 38 d'identifiants de documents du serveur de commandes 16, par une connexion FTP.

On passe ensuite à une étape 106 de temporisation à l'issue de laquelle on exécute à nouveau l'étape 100. La valeur de la temporisation de l'étape 106 permet de fixer la fréquence de mise à jour de la liste d'identifiants. Une valeur comprise entre quelques heures et quelques jours est convenable et dépend de la fréquence d'utilisation des moyens de stockage de documents 28.

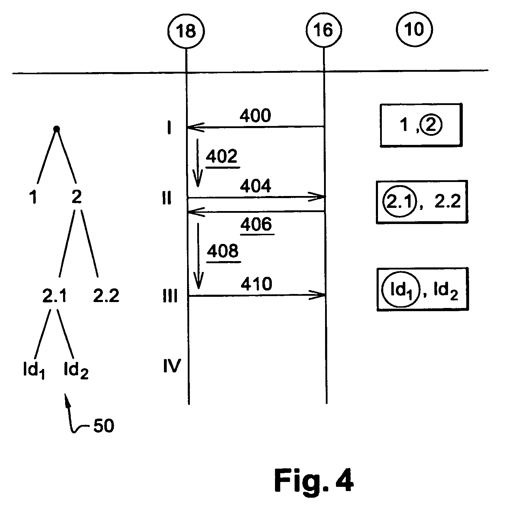

Un second mode de réalisation du procédé de mise à jour de la liste des identifiants de documents stockés dans les moyens de stockage 38 du serveur de commandes 16 est schématisé sur la figure 4.

Dans ce second mode de réalisation, on considère que les identifiants de documents sont classés dans le serveur de commandes 16 selon une arborescence comprenant plusieurs niveaux hiérarchiques. Cette arborescence est schématisée sur la figure 4 par un arbre 50 comprenant quatre niveaux hiérarchiques. Le niveau racine est le niveau l et le plus petit sous-niveau est le niveau IV. Pour un niveau hiérarchique donné, il peut exister plusieurs branches. Par exemple, le niveau hiérarchique III comprend les deux branches 2.1 et 2.2.

Comme représenté sur la figure 4, au début de la navigation, l'utilisateur est au niveau hiérarchique I. Par conséquent, les deux branches 1 et 2 sont affichées sur son terminal 10.

L'utilisateur décide d'accéder à la branche 2. Il le signifie au serveur de commandes 16 qui émet, au cours d'une étape 400, une requête de mise à jour vers le serveur de documents 18.

Au cours d'une étape 402, le serveur de documents 18 consulte les documents ou les sous-dossiers accessibles depuis la branche 2 du niveau hiérarchique II. Dans l'exemple représenté, la branche 2 du niveau hiérarchique Il permet d'accéder aux branches 2.1 et 2.2 du niveau III.

Au cours d'une étape suivante 404, le serveur de documents 18 transmet au serveur de commandes 16 une liste des identifiants des branches accessibles depuis la branche 2 du niveau hiérarchique II. Ainsi, il s'affiche sur le terminal 10 de l'utilisateur la liste des identifiants du niveau hiérarchique désiré, à savoir les identifiants 2.1 et 2.2.

L'utilisateur peut alors renouveler, au cours des étapes 406 à 410, les étapes 400 à 404 précédemment décrites de manière à accéder aux branches désirées du niveau hiérarchique IV.

Ainsi, lorsqu'au cours de la navigation l'utilisateur décide de changer de niveau hiérarchique, cela déclenche la mise à jour des identifiants du niveau hiérarchique auquel l'utilisateur accède.

Le procédé de transmission au client C de documents stockés par le serveur de documents 18 est schématisé sur la figure 3.

Au cours d'une étape 200 d'authentification, le client C fournit aux moyens d'authentification 30, par l'intermédiaire de l'ordinateur 10, son identifiant ainsi que son mot de passe. Au cours de l'étape de test 202, les moyens d'authentification 36 vérifient la validité de l'identifiant client et de son mot de passe. Si l'identifiant client et/ou le mot de passe n'est pas valide, on retourne à l'étape 200 d'authentification.

Si l'identifiant client et le mot de passe sont valides, on passe à une étape 204 de mise à disposition du client C des identifiants des documents qui sont susceptibles de lui être transmis. La liste des identifiants des documents susceptibles d'être transmis au client C est une sous-partie de la liste stockée dans les moyens de stockage 38. Cette sous-partie est fonction de l'identifiant du client C.

La liste des identifiants est mise à jour grâce à l'un des deux modes de réalisation du procédé de mise à jour précédemment décrit.

On passe ensuite à une étape 206 au cours de laquelle le client C désigne par leurs identifiants, grâce aux moyens de désignation 40, des documents qu'il souhaite obtenir.

Lorsque le client C a désigné les identifiants de tous les documents qu'il souhaite recevoir, il valide sa commande. On passe alors à une étape 208 au cours de laquelle les moyens de désignation 40 génèrent un fichier récapitulatif de la commande, qui est envoyé par l'intermédiaire du réseau Internet 12 au serveur intermédiaire 20.

Après réception de ce fichier, le serveur intermédiaire 20 vérifie au cours d'une étape 210 que la commande est correctement formulée. Le serveur 20 convertit ensuite le fichier de commande en une requête FTP qu'il envoie au cours d'une étape 212 à la passerelle 26. La passerelle 26, qui est la seule à connaître l'adresse IP du serveur de documents 18 transmet la commande au serveur 18.

Dès la réception de la liste des identifiants des documents à transmettre, les moyens de transmission 32 téléchargent depuis les moyens de stockage 28 les documents à transmettre, au cours d'une étape 214.

Une fois que tous les documents sont téléchargés, les moyens de transmission 32 créent au cours d'une étape 216 un fichier unique, éventuellement compressé, comprenant tous ces documents.

De préférence, le fichier unique comprenant tous les documents est protégé par cryptage, par exemple à l'aide d'une clé de cryptage associée à l'identifiant du client où à l'aide du mot de passe utilisé par le client C pour s'authentifier auprès du serveur de commandes 16.

Simultanément aux étapes 214 et 216, les moyens de transmission 32 consultent les moyens de stockage 30 d'une table de correspondance au cours d'une étape 218 pour déterminer l'adresse de livraison du client, c'est-à-dire l'adresse de courrier électronique à laquelle le fichier compressé doit être envoyé.

Lorsque les deux étapes 216 et 218 sont achevées, on passe à une étape 220 au cours de laquelle les moyens de transmission 32 envoient à l'adresse de livraison associée au client C un courrier électronique comprenant en pièces attachées les documents qu'il a désignés au cours de l'étape 206.

Au cours d'une dernière étape 222, le client C utilise l'ordinateur 10 pour se connecter au serveur 42 de messagerie de son adresse de courrier électronique pour récupérer les documents qu'il a commandés. De manière optionnelle, le serveur de messagerie 42 peut être confondu avec le serveur de commandes 16.

L'invention n'est pas limitée aux modes de réalisation précédemment décrits. En effet, en variante le dispositif de transmission de documents ne comprend pas de serveur intermédiaire. Dans ce cas, les listes des identifiants des documents désignés sont directement transmises entre ces deux serveurs, sans passer par un serveur intermédiaire. Dans ce cas, le serveur de commandes connaît l'adresse du serveur de documents auquel il envoie directement la commande.

Selon une autre variante non représentée, ce n'est pas le serveur de commandes qui envoie au serveur intermédiaire les identifiants de documents désignés ainsi que l'identifiant du client, mais c'est le serveur de documents qui télécharge ces identifiants sur le serveur intermédiaire.

## Revendications

1. Procédé de transmission à un client (C) de documents stockés par un serveur de documents (18), comportant les étapes suivantes :
- le client (C) s'authentifie (200) auprès d'un serveur de commandes (16) contenant des identifiants distincts de documents susceptibles d'être transmis,
- le client (C) désigne (206) des documents par leurs identifiants sur le serveur de commandes,
- le serveur de documents obtient (208, 210, 212) les identifiants de documents désignés et un identifiant du client (C),
- l'identifiant du client (C) est mis en correspondance avec une adresse de livraison prédéterminée grâce à une table de correspondance (30),
- les documents correspondant aux identifiants de documents désignés sont transmis (220) depuis le serveur de documents (18) vers l'adresse de livraison prédéterminée du client (C).
**caractérisé en ce que** la table de correspondance (30) est stockée sur le serveur de documents (18),
**en ce que** les identifiants de documents désignés ainsi que l'identifiant du client sont envoyés par le serveur de commandes (16) à un serveur intermédiaire (20),
**en ce que** le serveur intermédiaire (20) peut établir des connexions ou échanger du courriel avec le serveur de commandes (16) et/ou le serveur de documents (18),
**en ce que** l'adresse de livraison est une adresse de courrier électronique
et **en ce que** la transmission au client est effectuée par des moyens de transmission (32) qui envoient à l'adresse de livraison associée au client (C) un courrier électronique comprenant en pièces attachées les documents qu'il a désignés au cours de l'étape (206) de désignation des documents par leurs identifiants sur le serveur de commandes (16).

2. Procédé selon la revendication 1, dans lequel le serveur de commandes (16) met à disposition (204) du client, après son authentification (200), une liste d'identifiants de documents susceptibles d'être transmis.

3. Procédé selon la revendication 2, dans lequel la liste d'identifiants de documents susceptibles d'être transmis au client, mise à disposition (204) par le serveur de commandes (16), est fonction du client authentifié.

4. Procédé selon l'une quelconque des revendications 1 à 3, dans lequel les identifiants de documents désignés ainsi que l'identifiant du client sont envoyés (208, 210, 212) par le serveur de commandes au serveur de documents.

5. Procédé selon l'une quelconque des revendications 1 à 4, dans lequel les identifiants contenus dans le serveur de commandes (16) sont mis à jour régulièrement par transmission, par le serveur de documents (18), d'une liste d'identifiants au serveur de commandes (16).

6. Procédé selon l'une quelconque des revendications 1 à 5, dans lequel :
- les identifiants de documents sont classés dans le serveur de commandes (16) selon une arborescence comportant plusieurs niveaux hiérarchiques et dans laquelle l'utilisateur peut naviguer,
- au cours de la navigation, un changement de niveau hiérarchique déclenche la mise à jour des identifiants du niveau auquel l'utilisateur accède.

7. Procédé selon la revendication 6, dans lequel la mise à jour des identifiants est commandée par une requête du serveur de commandes (16) auprès du serveur de documents (18).

8. Dispositif de transmission de documents à un client (C), comportant :
- un serveur de documents (18) comportant :
o des moyens (28) de stockage de documents susceptibles d'être transmis au client,
o des moyens de transmission (32) au client de documents désignés vers l'adresse de livraison prédéterminée du client ;
- un serveur de commandes (16) comportant :
o des moyens d'authentification (36) du client,
o des moyens (38) de stockage d'identifiants de documents,
o des moyens (40) de désignation de documents par le client à l'aide des identifiants ;
**caractérisé en ce que** le serveur de documents comporte des moyens de stockage (30) d'une table de correspondance entre le client et une adresse de livraison prédéterminée, et **en ce que** le dispositif comporte
- des moyens (40, 44) de transmission des identifiants des documents désignés ainsi que l'identifiant du client depuis le serveur de commandes vers un serveur intermédiaire, qui peut établir des connexions ou échanger du courriel avec le serveur de commandes (16) et/ou le serveur de documents (18),
- des moyens de transmission de documents (32) aptes à envoyer à l'adresse de livraison associée au client (C) un courrier électronique comprenant en pièces attachées les documents désignés par leurs identifiants à l'aide des moyens de désignation de documents par le client.

## Patentansprüche

1. Verfahren zur Übertragung von gespeicherten Dokumenten an einen Klienten (C) durch einen Dokumentenserver (18), umfassend die folgenden Schritte:
- der Klient (C) authentifiziert sich (200) bei einem Steuerungsserver (16), der unterschiedliche Identifikatoren von Dokumenten enthält, die übertragen werden können,
- der Klient (C) bezeichnet (208) Dokumente mit ihren Identifikatoren auf dem Steuerungsserver,
- der Dokumentenserver erhält (208, 210, 212) die Identifikatoren von bezeichneten Dokumenten und einen Identifikator des Klienten (C),
- der Identifikator des Klienten (C) wird mit einer vorbestimmten Lieferadresse mittels einer Übereinstimmungstabelle (30) übereingestimmt,
- die Dokumente, die den Identifikatoren von bezeichneten Dokumenten entsprechen, werden vom Dokumentenserver (18) an die vorbestimmte Lieferadresse des Klienten (C) übertragen (220),
**dadurch gekennzeichnet, dass** die Übereinstimmungstabelle (30) auf dem Dokumentenserver (18) gespeichert ist,
dass die Identifikatoren von bezeichneten Dokumenten sowie der Identifikator des Klienten vom Steuerungsserver (16) an einem Zwischenserver (20) übertragen werden,
dass der Zwischenserver (20) Verbindungen herstellen oder E-Mails mit dem Steuerungsserver (18) und/oder dem Dokumentenserver (18) austauschen kann,
dass die Lieferadresse eine E-Mail-Adresse ist,
und dass die Übertragung an den Klienten durch Übertragungsmittel (32) erfolgt, die an die dem Klienten (C) zugeordnete Lieferadresse eine E-Mail senden, umfassend als Attachments die Dokumente, die er während des Schrittes (206) der Bezeichnung der Dokumente durch ihre Identifikatoren auf dem Steuerungsserver (16) bezeichnet hat.

2. Verfahren nach Anspruch 1, bei dem der Steuerungsserver (16) dem Klienten nach seiner Authentifizierung (200) eine Liste von Identifikatoren von Dokumenten, die übertragen werden können, zur Verfügung stellt (204).

3. Verfahren nach Anspruch 2, bei dem die Liste von Identifikatoren von Dokumenten, die an den Klienten übertragen werden können, die vom Steuerungsserver (18) zur Verfügung gestellt wird (204), vom authentifizierten Klienten abhängig ist.

4. Verfahren nach einem der Ansprüche 1 bis 3, bei dem die Identifikatoren von bezeichneten Dokumenten sowie der Identifikator des Klienten vom Steuerungsserver an den Dokumentenserver gesandt werden (208, 210, 212).

5. Verfahren nach einem der Ansprüche 1 bis 4, bei dem die im Steuerungsserver (16) enthaltenen Identifikatoren regelmäßig durch Übertragung einer Liste von Identifikatoren an den Steuerungsserver (16) durch den Dokumentenserver (18) aktualisiert werden.

6. Verfahren nach einem der Ansprüche 1 bis 5, bei dem:
- die Identifikatoren von Dokumenten im Steuerungsserver (18) nach einer Baumstruktur eingeteilt werden, der mehrere hierarchische Ebenen umfasst und in dem der Benutzer navigieren kann,
- während der Navigation eine Änderung der hierarchischen Ebene die Aktualisierung der Identifikatoren der Ebene, auf die der Benutzer zugreift, auslöst.

7. Verfahren nach Anspruch 6, bei dem die Aktualisierung der Identifikatoren durch einen Antrag des Steuerungsservers (16) beim Dokumentenserver (18) gesteuert wird.

8. Vorrichtung zur Übertragung von Dokumenten an einen Klienten (C), umfassend:
- einen Dokumentenserver (18), umfassend:
* Mittel (28) zur Speicherung von Dokumenten, die an den Klienten übertragen werden können,
* Mittel zur Übertragung (32) von bezeichneten Dokumente an den Klienten an die vorbestimmte Lieferadresse des Klienten;
- einen Steuerungsserver (16), umfassend:
* Mittel zur Authentifizierung (36) des Klienten,
* Mittel (38) zur Speicherung von Identifikatoren von Dokumenten,
* Mittel (40) zur Bezeichnung von Dokumenten durch den Klienten mit Hilfe der Identifikatoren;
**dadurch gekennzeichnet, dass** der Dokumentenserver Mittel (30) zur Speicherung einer Übereinstimmungstabelle zwischen dem Klienten und einer vorbestimmten Lieferadresse umfasst und dass die Vorrichtung umfasst:
- Mittel (40, 44) zur Übertragung der Identifikatoren der bezeichneten Dokumente sowie des Identifikators des Klienten vom Steuerungsserver zu einem Zwischenserver, der Verbindungen herstellen oder E-Mails mit dem Steuerungsserver (16) und/oder dem Dokumentenserver (18) austauschen kann,
- Mittel zur Übertragung von Dokumenten (32), die geeignet sind, an die dem Klienten (C) zugeordnete Lieferadresse eine E-Mail zu senden, umfassend im Attachment die Dokumente, die durch ihre Identifikatoren mit Hilfe von Mitteln zur Bezeichnung von Dokumenten durch den Klienten bezeichnet sind.

## Claims

1. A method of transmitting documents stored on a document server (18) to a client (C), the method comprising the following steps:
· the client (C) authenticating (200) his or herself with an order server (18) containing distinct identifiers of documents that may be transmitted;
· the client (C) designating (206) documents by their identifiers on the order server;
· the document server obtaining (208, 210, 212) the identifiers of the designated documents and an identifier of the client (C);
· matching the identifier of the client (C) with a predetermined delivery address by using a correspondence table (30); and
· transmitting (220) the documents corresponding to the identifiers of the designated documents from the document server (18) to the predetermined delivery address of the client (C);
the method being **characterized:**
**in that** the correspondence table (30) is stored on the document server (18);
**in that** the identifiers of the designated documents and the identifier of the client are sent by the order server (16) to an intermediate server (20);
**in that** the intermediate server (20) is capable of establishing connections or of exchanging email with the order server (16) and/or the document server (18);
**in that** the delivery address is an email address; and
**in that** the transmission to the client is performed by transmission means (32) that send an email to the delivery address associated with the client (C), the email having as attachments the documents as designated by the client during the step (206) of designating the documents by their identifiers on the order server (16).

2. A method according to claim 1, wherein, after the client has been authenticated (200), the order server (16) makes available (204) to the client a list of identifiers of documents that may be transmitted.

3. A method according to claim 2, wherein the list of identifiers of documents that may be transmitted to the client as made available (204) by the order server (16) is a function of the authenticated client.

4. A method according to any one of claims 1 to 3, wherein the identifiers of the designated documents and the identifier of the client are sent (208, 210, 212) by the order server to the document server.

5. A method according to any one of claims 1 to 4, wherein the identifiers contained in the order server (16) are updated regularly by the document server (18) transmitting a list of identifiers to the order server (16).

6. A method according to any one of claims 1 to 5, wherein:
· the document identifiers are classified in the order server (16) in a tree structure having a plurality of hierarchical levels and in which the user can browse; and
· while browsing, a change in hierarchical level causes the identifiers of the level to which the user is gaining access to be updated.

7. A method according to claim 6, wherein updating of the identifiers is ordered by a request from the order server (16) to the document server (18).

8. A device for transmitting documents to a client (C), the device comprising:
· a document server (18) comprising:
· means (28) for storing documents that may be transmitted to the client;
· transmission means (32) for transmitting designated documents to the client via the predetermined delivery address of the client;
· an order server (16) comprising:
· authentication means (36) for authenticating the client;
· storage means (38) for storing document identifiers; and
· designation means (40) enabling the client to designate documents with the help of identifiers;
the device being **characterized:**
**in that** the document server includes storage means (30) for storing a correspondence table matching the client and a predetermined delivery address; and in that the device includes:
· transmission means (40, 44) for transmitting identifiers of designated documents together with the identifier of the client from the order server to an intermediate server capable of setting up connections by exchanging email with the order server (16) and/or the document server (18); and
· document transmission means (32) suitable for sending an email to the delivery address associated with the client (C), the email including as attachments the documents designated by their identifiers with the help of the designation means for enabling the client to designate documents.
